# EUROPEAN PATENT APPLICATION

(11) **EP 1 610 171 A1**
(43) Date of publication of application: **28.12.2005**
(21) Application number: 05013239.8
(22) Date of filing: 20.06.2005
(51) Int. Cl.: G02F 1/13357, G09G 3/34

(54) **Illumination device and method**

(30) Priority: 21.06.2004 JP 2004182451
(71) Applicant: KABUSHIKI KAISHA TOYOTA JIDOSHOKKI, Kariya-shi, Aichi-ken (JP)
(72) Inventor: Noritake, Kazuto, Kariya-shi, Aichi-ken (JP)
(74) Representative: TBK-Patent

(57) **Abstract**

The present invention provides an illumination device (A) used as a backlight in a liquid crystal display device (C), including: a main light source including a fluorescent tube (3); an auxiliary light source including an organic electroluminescence element (2); an optical sensor (14) for detecting an ambient brightness; and an illumination controller (13) for turning on the main light source and controlling illumination with the auxiliary light source based on the ambient brightness detected with the optical sensor.

## Description

### BACKGROUND OF THE INVENTION

### Field of the Invention:

The present invention relates to an illumination device and method.

### Description of the Related Art:

A liquid crystal display device has been widely used as a thin, lightweight display. The liquid crystal display device uses a light-receiving element that is not self-luminous. Thus, the liquid crystal display device is generally furnished with an illumination device as a backlight at its back and illuminated with light from the illumination device to form an image. A typical illumination device is a fluorescent tube.

As regards the fluorescent tube used as the illumination device, a reflector and a diffuser are arranged below and above the fluorescent tube, respectively, with the aim of efficiently and uniformly applying light emitted from the fluorescent tube to the liquid crystal display device.

However, a portion just above the fluorescent tube tends to be lighted more than the rest, and thus uniform illumination cannot be attained unless a distance from the fluorescent tube to the upper-side diffuser is set large. The entire thickness of the illumination device is thereby increased.

In general, the fluorescent tube has difficulties in changing its luminance, especially in changing its luminance instantaneously. As a solution to this, JP 2000-310776 A discloses, for example, a liquid crystal display device where an auxiliary light source constituted of a light emitting diode etc. is placed below a main light source constituted of a fluorescent tube to make up for lack of luminance in low-luminance areas.

The liquid crystal display device disclosed in JP 2000-310776 A realizes an illumination device capable of uniform illumination but takes no measure for dealing with a change in ambient brightness, and is always illuminated with constant luminance. As a result, when used in bright surroundings, the liquid crystal display device becomes insufficient in screen's luminance relative to the ambient light, making it difficult to view an image.

Besides, there is no consideration for how to deal with an image change. Thus, even when an image is abruptly changed, the display device is continuously illuminated at the same luminance and chromaticity. An image of such a scene is somewhat unimpressive.

### SUMMARY OF THE INVENTION

The present invention has been made in order to solve the above-mentioned problems of the conventional techniques, and it is therefore an object of the present invention to provide an illumination device and method capable of displaying an easy-to-view image even when an ambient brightness is changed.

It is another object of the present invention to provide an illumination device and method capable of highlighting a change in image.

According to a first aspect of the present invention, there is provided an illumination device used as a backlight for a liquid crystal display device, including: a main light source including a fluorescent tube; an auxiliary light source including an organic electroluminescence element; an optical sensor for detecting an ambient brightness; and an illumination controller for turning on the main light source and controlling illumination with the auxiliary light source based on the ambient brightness detected with the optical sensor.

According to a second aspect of the present invention, there is provided an illumination device used as a backlight for a liquid crystal display device, including: a main light source including a fluorescent tube; an auxiliary light source including an organic electroluminescence element; and an illumination controller for turning on the main light source, detecting an image change based on an image signal inputted to the liquid crystal display device, and controlling illumination with the auxiliary light source based on the detected image change.

According to a third aspect of the present invention, there is provided an illumination method for illuminating a liquid crystal panel of a liquid crystal display device, including: turning on a main light source including a fluorescent tube; detecting an ambient brightness; and controlling illumination with an auxiliary light source including an organic electroluminescence element based on the detected ambient brightness.

According to a fourth aspect of the present invention, there is provided an illumination method for illuminating a liquid crystal panel of a liquid crystal display device, including: turning on a main light source including a fluorescent tube; detecting an image change based on an image signal inputted to the liquid crystal display device; and controlling illumination with an auxiliary light source including an organic electroluminescence element based on the detected image change.

### BRIEF DESCRIPTION OF THE DRAWINGS

FIG. 1 is a cross sectional diagram showing an illumination panel used in an illumination device according to a first embodiment of the present invention;
FIG. 2 is a cross sectional diagram showing a construction of an organic EL element used in the illumination panel;
FIG. 3 is a cross sectional diagram showing a liquid crystal display device furnished with the illumination panel of the illumination device according to the first embodiment of the present invention as a backlight;
FIGS. 4 and 5 are block diagrams showing constructions of the illumination devices according to the first and second embodiments, respectively;
FIG. 6 is a plan view schematically showing an organic EL element of an illumination panel used in a third embodiment of the present invention; and
FIG. 7 is a cross sectional diagram showing a construction of an illumination panel used in a fourth embodiment of the present invention.

### DESCRIPTION OF THE PREFERRED EMBODIMENTS

Hereinafter, embodiments of the present invention are described with reference to the accompanying drawings.

### First Embodiment

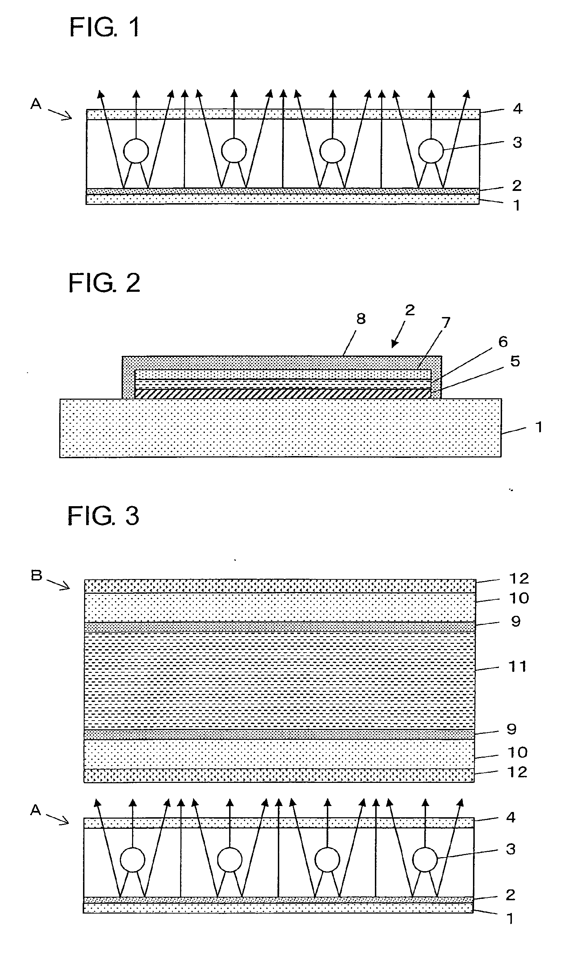

FIG. 1 shows a construction of an illumination panel A used in an illumination device according to a first embodiment of the present invention. An organic electroluminescence (EL) element 2 serving as an auxiliary light source is formed on the surface of a panel substrate 1. A plurality of fluorescent tubes 3 serving as main light sources are arranged in parallel above the organic EL element 2, and a light diffuser 4 is placed above the fluorescent tubes 3.

The organic EL element 2 emits white light, for instance. As shown in FIG. 2, the element includes a cathode 5 formed on the surface of the panel substrate 1, an organic light emitting layer 6 formed on the cathode 5, an anode 7 formed on the organic light emitting layer 6, and a sealing film 8 covering the cathode 5, the organic light emitting layer 6, and the anode 7.

The cathode 5 needs only to function as an electrode and reflect at least visible light, and can be formed of Al, Cr, Mo, an Al alloy, an Al/Mo laminate, or the like. The organic light emitting layer 6 contains at least known organic light emitting materials such as Alq3 or DCM. Further, it is possible to form one or more layers such as an electron transport layer or a hole transport layer used for any known organic EL device, between the electrodes as appropriate. The anode 7 needs only to function as an electrode and be transmissive or semi-transmissive of at least visible light. The anode is formed of, for example, ITO. Each layer may be formed through any known thin-film formation method like a vacuum vapor deposition method. The sealing film 8 should be transmissive or semi-transmissive of at least visible light, and is formed of, for example, silicon nitride, silicon oxynitride, or silicon oxide.

In the organic EL element 2, light exits from the surface of the sealing film 8. In other words, the light emitted from the organic light emitting layer 6 directly enters the anode 7 or indirectly enters there after being reflected by the surface of the cathode 5, and then passes through the sealing film 8 to exit therefrom.

In the illumination panel A shown in FIG. 1, when the fluorescent tube 3 is turned on, the light emitted from the fluorescent tube 3 directly enters the light diffuser 4 or indirectly enters there after being reflected by the surface of the cathode 5 of the organic EL element 2. The light is then diffused to exit therefrom. In this case, a portion just above the fluorescent tube 3 is lighted more than the rest. However, when the organic EL element 2 is turned on, the light emitted from the organic EL element 2 enters the light diffuser 4 and is diffused to exit therefrom. This diffused light compensates for the lack of luminance in an area that cannot secure sufficient luminance with the fluorescent tube 3 alone, and enables uniform illumination with little unevenness in luminance.

As shown in FIG. 3, the illumination panel A is placed as a backlight behind a liquid crystal panel B, thereby constituting the liquid crystal display device. The liquid crystal panel B includes a pair of glass substrates 10 which are arranged in parallel to each other and each of which is laminated with a transparent electrode 9 on the inner side. The transparent electrodes 9 are thus arranged face to face. Liquid crystal is injected and sealed between the pair of glass substrates 10 to form a liquid crystal layer 11. In addition, a polarizing plate 12 is laminated on the outer side of each of the pair of glass substrates 10.

Uniform light emitted from the fluorescent tubes 3 and the organic EL element 2 in the illumination panel A enters the rear side of the liquid crystal panel B. An image is then displayed by display light being emitted from the front side of the liquid crystal panel B in accordance with an orientation of liquid crystal molecules in the liquid crystal layer 11.

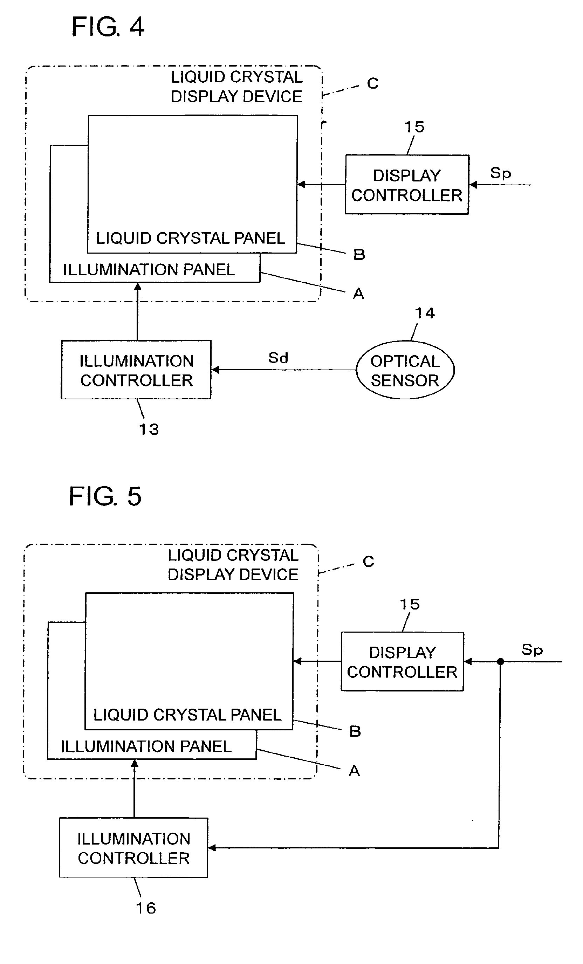

FIG. 4 shows the overall construction of the illumination device according to the first embodiment. An illumination controller 13 is connected to the illumination panel A. The illumination controller 13 is connected to an optical sensor 14 for detecting the brightness of environments surrounding a liquid crystal display device C. The illumination controller 13 executes on/off control of the fluorescent tubes 3 in the illumination panel A and controls a driving state of the organic EL element 2 in the illumination panel A based on a detection signal Sd from the optical sensor 14.

Further, a display controller 15 is connected to the liquid crystal panel B and inputted with an image signal Sp from the outside. The display controller 15 controls the orientation of liquid crystal molecules in the liquid crystal layer 11 of the liquid crystal panel B based on the inputted image signal Sd to display an image.

Next, an operation of the illumination device is described. Upon the power-on of the liquid crystal display device C, the illumination controller 13 turns on each fluorescent tube 3 as a main light source of the illumination panel A. In addition, the optical sensor 14 detects the brightness of environments surrounding the liquid crystal display device C and a detection signal Sd is inputted to the illumination controller 13. The illumination controller 13 controls a driving state of the organic EL element 2 as an auxiliary light source of the illumination panel A based on the inputted detection signal Sd from the optical sensor 14.

To elaborate, the brightness level detected by the optical sensor 14 is a predetermined value or lower, the illumination controller 13 judges that the environments surrounding the liquid crystal display device C are not so bright, and thus causes predetermined driving current to flow through the organic EL element 2, allowing the element to emit light with predetermined luminance. This compensates for the lack of luminance in an area that cannot secure sufficient luminance with the fluorescent tube 3 alone. As a result, uniform illumination is secured throughout the illumination panel A. In contrast, when the brightness level detected by the optical sensor 14 exceeds the predetermined value, the illumination controller 13 judges that the environments surrounding the liquid crystal display device C are bright, and increases the driving current for the organic EL element 2 in accordance with the level detected by the optical sensor 14 to enhance the light emission luminance. Therefore, the luminance is increased throughout the entire illumination panel A.

Here, inputted with the image signal Sp, the display controller 15 controls the orientation of liquid crystal molecules in the liquid crystal layer 11 of the liquid crystal panel B in accordance with the image signal Sp. The liquid crystal panel B is irradiated with illumination light from the back by the illumination panel A to thereby display an image on its screen. At this time, the illumination panel A applies uniform illumination, so the displayed screen involves little unevenness in luminance.

In general, it is difficult to adjust the luminance of the fluorescent tube. To that end, an illumination device composed of the fluorescent tube alone sets its luminance in conformity with either a bright place or a dark place. With the luminance set in conformity with the dark place, an image is hard to view in the bright place; with the luminance set in conformity with the bright place, an image is hard to view in the dark place.

The illumination panel A emits light with luminance adapted to the brightness of the environments surrounding the liquid crystal display device C, and thus can display an easy-to-view image even in the bright surroundings. In particular, the optical sensor 14 detects the ambient brightness all the time, whereby even when the ambient brightness changes, the luminance of the organic EL element 2 in the illumination panel A is adjusted in response to the change, making it possible to display an easy-to-view image all the time.

### Second Embodiment

FIG. 5 shows the overall construction of an illumination device according to a second embodiment of the present invention. The illumination device according to the second embodiment differs from the illumination device of the first embodiment shown in FIG. 4 in that the optical sensor 14 is omitted, and an illumination controller 16 is connected to the illumination panel A in place of the illumination controller 13, and the image signals Sp to be inputted to the display controller 15 are inputted to the illumination controller 16 as well.

The illumination controller 16 turns on the fluorescent tubes 3 of the illumination panel A and causes predetermined driving current to flow through the organic EL element 2 to thereby emit light with predetermined luminance. This compensates for the lack of luminance in an area that cannot secure sufficient luminance with the fluorescent tube 3 alone. As a result, uniform illumination is attained throughout the illumination panel A.

In addition, the illumination controller 16 detects the change in image based on the inputted image signal Sp. For example, in displaying a high-luminance image whose luminance signal (signal representing luminance) in the image signals Sp is at a level higher than a predetermined value, the illumination controller 16 increases the driving current for the organic EL element 2 to enhance the light emission luminance, thereby improving the luminance throughout the entire illumination panel A. Thus, images of an explosion scene or shining scene are displayed in a highlighted form with higher luminance to realize more impressive images. In general, it is difficult to change the luminance quickly with the fluorescent tube. However, the organic EL element responds to the change quickly and thus can adequately respond to any instantaneous image change. Moreover, the liquid crystal display device may be designed so that the driving current flowing into the organic EL element 2 is temporarily increased to display a screen with high luminance for a scene to be impressed on a viewer.

### Third Embodiment

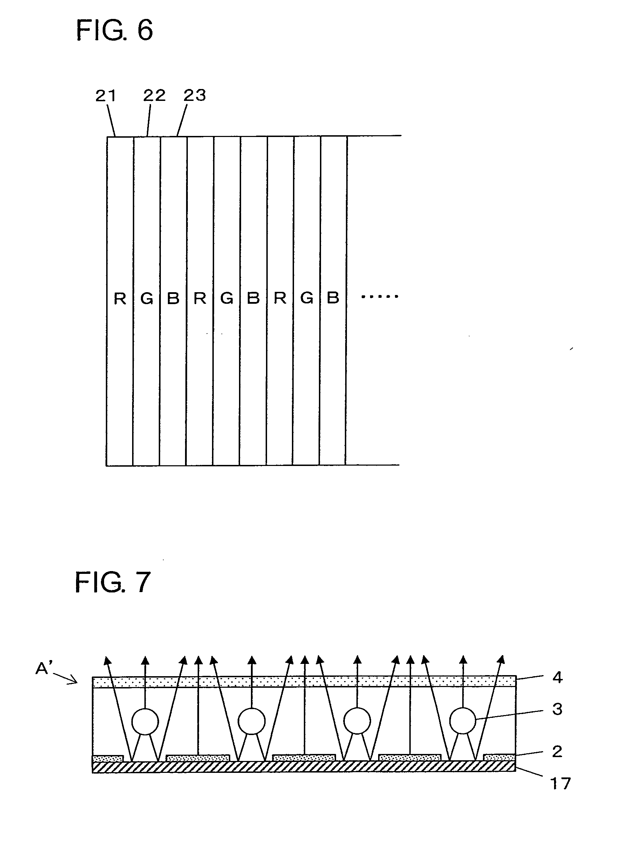

FIG. 6 schematically shows an organic EL element as an auxiliary light source used in an illumination panel of an illumination device according to a third embodiment of the present invention. This organic EL device has such construction that a plurality of red-light emitting elements (red light sources) 21, a plurality of green-light emitting elements (green light sources) 22, and a plurality of blue-light emitting elements (blue light sources) 23, each of which are assigned to very small areas, are arranged in order. The red-light emitting elements 21, green-light emitting elements 22, and blue-right emitting elements 23 are driven under control, enabling adjustment of both luminance and chromaticity.

If the organic EL element 2 of the illumination device according to the first embodiment is structured as shown in FIG. 6, it is possible to adjust the chromaticity as well as the luminance of the illumination panel A in accordance with an ambient brightness detected by the optical sensor 14. In general, human eyes have a sensitivity to light with a spectrum whose peak is shifted to a short-wavelength side in darker environments as compared with that in bright environments. In other words, the human eyes tend to exhibit higher reactivity to blue light on a short-wavelength side than to red light on a longer-wavelength side in the dark environments. Based on this, when the surrounding environment is judged dark from the fact that the level detected by the optical sensor 14 is a predetermined value or lower, the emission with the blue-light emitting element 23 as the auxiliary light source may be suppressed for illuminating the liquid crystal panel B. This makes up for light in other colors than blue to realize a screen that looks more whitish in the human eyes.

In addition, if the organic EL element 2 of the illumination device according to the second embodiment is structured as shown in FIG. 6, it is possible to highlight an image of a particular scene through the adjustment of not luminance but chromaticity. Note that the image can also be highlighted by adjusting both the luminance and the chromaticity. It is also possible to adjust one or both of the luminance and the chromaticity for the scene to be impressed.

### Fourth Embodiment

FIG. 7 shows the construction of an illumination panel A' of an illumination device according to a fourth embodiment of the present invention. The illumination panel A' differs from the illumination panel A of the first embodiment as shown in FIG. 1 in that a reflector 17 substitutes for the panel substrate 1, and the organic EL element 2 is selectively placed on the surface of the reflector 17 in an area outside the back of the fluorescent tube 3 as a main light source.

When the fluorescent tube 3 is turned on, the light emitted from the fluorescent tube 3 directly enters the light diffuser 4 or indirectly enters there after being reflected by the surface of the reflector 17 at the rear of each fluorescent tube 3. The light is then diffused to exit therefrom. Further, the light emitted from the fluorescence tube 3 is partially reflected by the surface of the cathode 5 in the organic EL element 2 selectively arranged to enter the light diffuser 4, and then is diffused to exit therefrom. Meanwhile, upon turning on the organic EL element 2 placed in the area outside the back of the fluorescent tube 3, the light emitted from the organic EL element 2 enters the light diffuser 4. The light is then diffused to exit therefrom. This compensates for the lack of luminance in an area that cannot secure sufficient luminance with the fluorescent tube 3 alone, and enables uniform illumination with little unevenness in luminance.

In the illumination panel A shown in FIG. 1, light emitted from the organic EL element 2 positioned at the rear of the fluorescent tube 3 is partially blocked off by the back of the fluorescent tube 3 and thus is prevented from directly entering the light diffuser 4. Even if the organic EL element 2 is selectively placed only in the area outside the back of the fluorescent tube 3 as in the fourth embodiment, the total amount of illumination light emitted from the illumination panel A' scarcely changes. Besides, the organic EL element is not formed at the rear of the fluorescent tube 3, so power consumption of the organic EL element 2 can be accordingly saved.

Note that in the above first to fourth embodiments, the description is given of a top-emission type organic EL element as shown in FIG. 2, where the reflective cathode 5, the organic light emitting layer 6, and the transmissive anode 7 are stacked in this order on the panel substrate 1, and light emitted from the organic light emitting layer 6 passes through the anode 7 on the side opposite to the panel substrate 1 and exits the element. However, the present invention is not limited thereto, and a bottom-emission type organic EL element can be used, where a transmissive anode, an organic light emitting layer, and a reflective cathode are stacked in this order on a glass substrate, and light emitted from the organic light emitting layer passes through the glass substrate and then exits the element.

According to the present invention, it is possible to provide the illumination method and device capable of displaying an easy-to-view image even if an ambient brightness changes.

It is also possible to provide the illumination device and method capable of highlighting the change in image.

The present invention provides an illumination device used as a backlight for a liquid crystal display device, including: a main light source including a fluorescent tube; an auxiliary light source including an organic electroluminescence element; an optical sensor for detecting an ambient brightness; and an illumination controller for turning on the main light source and controlling illumination with the auxiliary light source based on the ambient brightness detected with the optical sensor.

## Claims

1. An illumination device used as a backlight for a liquid crystal display device, comprising:
a main light source including a fluorescent tube;
an auxiliary light source including an organic electroluminescence element;
an optical sensor for detecting an ambient brightness; and
an illumination controller for turning on the main light source and controlling illumination with the auxiliary light source based on the ambient brightness detected by the optical sensor.

2. The illumination device according to claim 1, wherein the illumination controller controls luminance of the auxiliary light source.

3. The illumination device according to claim 2, wherein the illumination controller increases the luminance of the auxiliary light source when a level of the ambient brightness detected by the optical sensor exceeds a predetermined value.

4. The illumination device according to claim 1, wherein
the auxiliary light source includes a plurality of red light sources, a plurality of green right sources, and a plurality of blue light sources, each of which are divided into small areas to be arranged,
the illumination controller controlling chromaticity obtained from the auxiliary light source.

5. The illumination device according to claim 4, wherein the illumination controller suppresses the emission with the blue light sources of the auxiliary light source when a level of the ambient brightness detected by the optical sensor is a predetermined value or lower.

6. The illumination device according to claim 1, wherein the auxiliary light source is placed behind the main light source.

7. The illumination device according to claim 6, further comprising a reflector that is placed behind the main light source and adapted to reflect light from the main light source,
the auxiliary light source being selectively placed on a surface of the reflector in an area outside a rear portion of the main light source.

8. An illumination device used as a backlight for a liquid crystal display device, comprising:
a main light source including a fluorescent tube;
an auxiliary light source including an organic electroluminescence element; and
an illumination controller for turning on the main light source, detecting an image change based on an image signal inputted to the liquid crystal display device, and controlling illumination with the auxiliary light source based on the detected image change.

9. The illumination device according to claim 8, wherein the illumination controller controls luminance of the auxiliary light source.

10. The illumination device according to claim 9, wherein the illumination controller increases luminance of the auxiliary light source when a level of a signal representing luminance in the image signals exceeds a predetermined value.

11. The illumination device according to claim 8, wherein
the auxiliary light source includes a plurality of red light sources, a plurality of green right sources, and a plurality of blue light sources, each of which are divided into small areas to be arranged,
the illumination controller controlling chromaticity obtained from the auxiliary light source.

12. The illumination device according to claim 8, wherein the auxiliary light source is placed behind the main light source.

13. The illumination device according to claim 12, further comprising a reflector that is placed behind the main light source and adapted to reflect light from the main light source,
the auxiliary light source being selectively placed on a surface of the reflector in an area outside a rear portion of the main light source.

14. An illumination method for illuminating a liquid crystal panel of a liquid crystal display device, comprising the steps of:
turning on a main light source including a fluorescent tube;
detecting an ambient brightness; and
controlling illumination with an auxiliary light source including an organic electroluminescence element based on the detected ambient brightness.

15. The illumination method according to claim 14, wherein luminance of the auxiliary light source is controlled.

16. The illumination method according to claim 15, wherein the luminance of the auxiliary light source is increased when a level of the detected ambient brightness exceeds a predetermined value.

17. The illumination method according to claim 14, wherein chromaticity obtained from the auxiliary light source is controlled.

18. The illumination method according to claim 17, whereinemission of blue light from the auxiliary light source is suppressed when a level of the detected ambient brightness is a predetermined value or lower.

19. The illumination method according to claim 14, further comprising the steps of:
reflecting light from the main light source with a reflector placed behind the main light source; and
controlling illumination with the auxiliary light source which is selectively placed on a surface of the reflector in an area outside a rear portion of the main light source.

20. An illumination method for illuminating a liquid crystal panel of a liquid crystal display device, comprising the steps of:
turning on a main light source including a fluorescent tube;
detecting an image change based on an image signal inputted to the liquid crystal display device; and
controlling illumination with an auxiliary light source including an organic electroluminescence element based on the detected image change.

21. The illumination method according to claim 20, wherein luminance of the auxiliary light source is controlled.

22. The illumination method according to claim 21, wherein the luminance of the auxiliary light source is increased when a level of a signal representing luminance in the image signals exceeds a predetermined value.

23. The illumination method according to claim 20, wherein chromaticity obtained from the auxiliary light source is controlled.

24. The illumination method according to claim 20, further comprising the steps of:
reflecting light from the main light source with a reflector placed behind the main light source; and
controlling illumination with the auxiliary light source which is selectively placed on a surface of the reflector in an area outside a rear portion of the main light source.
